Europäisches Patentamt

European Patent Office

Office européen des brevets

(19)

(11) Veröffentlichungsnummer: **0 043 906**
**B1**

## (12) EUROPÄISCHE PATENTSCHRIFT

(45) Veröffentlichungstag der Patentschrift:
25.04.84

(21) Anmeldenummer: 81103968.4

(22) Anmeldetag: 23.05.81

(51) Int. Cl.³: **C 08 F 12/16, C 08 L 101/00,
C 07 C 25/28, C 07 C 17/34**

(54) **Verfahren zur Herstellung von Polypentabromstyrol und seine Verwendung.**

(30) Priorität: 07.07.80 DE 3025666

(43) Veröffentlichungstag der Anmeldung:
20.01.82 Patentblatt 82/3

(45) Bekanntmachung des Hinweises auf die Patenterteilung:
25.04.84 Patentblatt 84/17

(84) Benannte Vertragsstaaten:
BE FR GB IT NL

(56) Entgegenhaltungen:
CHEMICAL ABSTRACTS, Band 85, Nr. 10, 6. September
1976, Seite 46, Nr. 63979b, Columbus, Ohio, USA

**Die Akte enthält technische Angaben, die nach dem
Eingang der Anmeldung eingereicht wurden und die
nicht in dieser Patentschrift enthalten sind.**

(73) Patentinhaber: **Chemische Fabrik Kalk GmbH, Kalker
Hauptstrasse 22 Postfach 91 01 57, D-5000 Köln 91 (DE)**

(72) Erfinder: **Jenkner, Herbert, Dr., Am Quechenhauf 8,
D-5024 Pulheim 2 (DE)**
Erfinder: **Strang, Robert, Mattlener Weg 9,
D-5000 Köln 71 (DE)**
Erfinder: **Adermann, Peter, Lehmbacher Weg 3a,
D-5064 Rösrath (DE)**

Verfahren zur Herstellung von Polypentabromstyrol und seine Verwendung

Aromatische Bromverbindungen haben sich in zahlreichen Kunststoffen als Brandschutzmittel bewährt. Beispiele solcher Brandschutzmittel sind: Penta- bzw. Decabromdiphenyläther, Octabromdiphenyl, die Dibrompropyläther des Tribromphenols oder des Tetrabrom-bis-(hydroxyphenyl)-propans, Hexabrombenzol und dergleichen.

Beim Einsatz solcher aromatischer Bromverbindungen in thermoplastische Kunststoffe, die nur bei hohen Temperaturen verarbeitet werden können, müssen an die thermische Beständigkeit solcher aromatischen Bromverbindungen besonders hohe Anforderungen dahingehend gestellt werden, daß diese Verbindungen bei den Verarbeitungstemperaturen des betreffenden thermoplastischen Kunststoffs noch kein Brom bzw. keinen Bromwasserstoff abspalten, da dieser Korrosionsschäden an den Verarbeitungseinrichtungen bewirkt. Allerdings darf die thermische Stabilität der aromatischen Bromverbindungen nicht soweit gehen, daß bei Beflammung des Kunststoffs, in dem sie inkorporiert sind, die zur Brandhemmung notwendige Abspaltung von Brom bzw. Bromwasserstoff unterbleibt. Weiterhin darf das Brandschutzmittel aus dem Kunststoff nicht zu dessen Oberfläche hin migrieren, da es von dort durch mechanische Einwirkungen entfernt und auf diese Weise der Gehalt an Brandschutzmittel im Kunststoff unter die Grenze der beabsichtigten Wirksamkeit vermindert wird. Ein Beispiel für eine aromatische Bromverbindung, die aufgrund ihres hohen Bromgehalts besonders als Brandschutzmittel für Kunststoffe geeignet sein müßte, ist das Hexabrombenzol. Jedoch migriert das Hexabrombenzol sehr schnell zur Oberfläche des Kunststoffs und sublimiert außerdem bereits bei Temperaturen, die im Bereich der Verarbeitungstemperaturen der vorstehend angesprochenen thermoplastischen Kunststoffe liegen.

Es wurden daher in letzter Zeit immer mehr aromatische Bromverbindungen als Brandschutzmittel vorgeschlagen, die nicht in monomerer, sondern in polymerer Form eingesetzt werden, um einerseits die hohe thermische Beständigkeit zu behalten und andererseits das Ausschwitzen bzw. Ausblühen aus dem Kunststoff möglichst zu verhindern. Solche Verbindungen sind z. B. das polymere Pentabrombenzylacrylat bzw. -methacrylat. Allerdings hat sich gezeigt, daß bei Großversuchen die Herstellung eines einheitlichen Polypentabromphenylacrylats nicht leicht zu verwirklichen ist, so daß das an und für sich gute Brandschutzmittel sehr aufwendig in der Herstellung ist.

Hieraus ergibt sich die Aufgabe, nach einem einfach herstellbaren Brandschutzmittel für thermoplastische Kunststoffe zu suchen, das bei Verarbeitungstemperaturen von 220 bis 280°C dieser thermoplastischen Kunststoffe kein Brom bzw. keinen Bromwasserstoff abspaltet und aus dem Kunststoff nicht migriert.

Gegenstand der Erfindung ist die Herstellung von Polypentabromstyrol mit einem Bromgehalt zwischen 76 und 80%, das bei einer Temperatur von über 280°C plastisch ist und sich bei einer Temperatur von über 400°C thermisch zersetzt.

Die Bromzahl, die eine Maßzahl für die in einer organischen Substanz enthaltenen Doppelbindungen ist, wird vorteilhaft nach den Bromadditionsmethode von Rosenmund und Kuhnhenn mit einer essigsauren Lösung von Pyridinsulfatdibromid in Chloroform/Eisessig in Anwesenheit von Quecksilber-II-acetat als Katalysator bestimmt.

Die Löslichkeit des Polypentabromstyrols in den gebräuchlichen organischen Lösungsmitteln ist so gering, daß sein Molekulargewicht nicht bestimmbar ist. Sein Molekulargewicht ist aber zumindest so hoch, daß es aus thermoplatischen Kunststoffen, in die es als Brandschutzmittel eingearbeitet ist, nicht migriert. Außerdem ist das Polypentabromstyrol der Erfindung thermisch in dem Temperaturbereich stabil, in dem thermoplastische Kunststoffe verarbeitet werden, obgleich es sich thermisch bei Brandtemperaturen zersetzt.

Zur Herstellung des Polypentabromstyrols der Erfindung wird erfindungsgemäß Pentabromstyrol in einem Alkohol-Lösungsmittel mit einem Siedpunkt von über 100°C, wie beispielsweise Methylglykol, Äthylglykol oder auch Glykol, auf eine Temperatur von 100 bis 150°C erwärmt, mit einer Lösung eines Polymerisationskatalysators, wie beispielsweise Dibenzoylperoxid, Dicumylperoxid, Peroxidisulfat, tert. Butylperpivalat oder Azo-bis-(isobutyronitril), in dem Alkohol-Lösungsmittel vermischt und das Gemisch mehrere Stunden, vorzugsweise 2 bis 8 Stunden, gerührt, worauf aus dem abgekühlten Reaktionsgemisch der Feststoffanteil als Produkt abgetrennt, mit Methanol gewaschen und bei einer Temperatur von 50 bis 70°C getrocknet wird.

Es besteht weiter die Möglichkeit, das Polypentabromstyrol gemäß der Erfindung aus Pentabromphenyläthylbromid dadurch herzustellen, daß dieses in Gegenwart von Alkalihydroxid oder -carbonat, vorzugsweise Natriumhydroxid oder Natriumcarbonat, im molaren Verhältnis zu Hydroxid bzw. Carbonat von 1 : 1,0 bis 1 : 1,2 bzw. 1 : 0,5 bis 1 : 0,6 in einem Alkohol mit einem Siedepunkt von über 100°C, vorzugsweise Methylglykol, gelöst zum Sieden erhitzt wird, bis das durch die Umsetzung entstandene Wasser aus dem Reaktionsgemisch abgetrieben ist. Anschließend wird dem auf einer Temperatur von etwa 120°C gehaltenen Gemisch ein in dem gleichen Alkohol gelöster Polymerisationskatalysator, vorzugsweise Dicumylperoxid oder Azo-bis-(isobutyronitril), im Laufe von 2 bis 5 Stunden zudosiert, worauf das Gemisch noch mehrere Stunden gerührt wird. Danach wird aus dem abgekühlten Gemisch der Feststoffanteil abgetrennt, mit Methanol gewaschen und getrocknet. Die Mutterlauge kann zumindest zum Teil für einen neuen Ansatz wieder verwendet werden.

Als Alkohol-Lösungsmittel sind für die vorstehenden Verfahrensalternativen noch Glykol und Äthylglykol geeignet. Als Polymerisationskatalysatoren können für die Verfahrensalternativen der Erfindung Dicumylperoxid, Dibenzoylperoxid, Peroxidisulfat, tert. Butylperpivilat und Azo-bis-(isobutyronitril) eingesetzt werden. Die Menge des Polymerisationskatalysators soll pro Mol Pentabromstyrol oder Pentabromphenyläthylbromid etwa 0,05 bis 0,2 Mol betragen.

Das Polypentabromstyrol läßt sich nach dem vorstehend angegebenen Verfahren in technisch wenig aufwendigen und einfach durchzuführenden Maßnahmen herstellen.

Das Polypentabromstyrol der Erfindung ist ein vorzügliches Brandschutzmittel für thermoplastische Kunststoffe und Kunststoffmischungen wie beispielsweise gesättigte Polyester, Polyolefine und Polystyrol, besonders in Form von ABS-Polymerisaten und mit Polybutadien modifiziertem hochschlagzähem Polystyrol. Die einzusetzende Menge an Brandschutzmittel richtet sich nach der Art des Kunststoffs und der zu erzielenden Brandwidrigkeit und beträgt etwa 5 bis 25 Gew.-%, bezogen auf das Gewicht der gebrauchsfertigen Kunststoffmischung.

Als Polymeres besitzt das so hergestellte Polypentabromstyrol eine Molekülgröße, die derjenigen des zu schützenden thermoplastischen Kunststoffs nahekommt und schwitzt deshalb nicht aus. Das Polypentabromstyrol gewährleistet daher einen dauerhaften Brandschutz in thermoplastischen Kunststoffen, in denen es enthalten ist.

### Beispiel 1

50 Gew.-Teile Pentabromstyrol werden mit 130 Gew.-Teilen Methylglykol verrührt. Nach Erwärmen dieses Gemisches auf eine Temperatur von 110° C wird in dieses eine Lösung von 1 Gew.-Teil Dicumylperoxid in 20 Gew.-Teilen Methylglykol eingerührt und das Reaktionsgemisch bei einer Temperatur von 120° C für die Dauer von 5 Stunden weitergerührt. Nach dem Abkühlen wird das ausgefallene Polymerisat abgetrennt, zunächst mit Methylglykol und anschließend mit Methanol gewaschen und bei 60° C getrocknet. Es werden 48 Gew.-Teile Polypentabromstyrol als farbloses feinteiliges Polymerisat erhalten, dessen Erweichungspunkt auf der Kofler-Bank über 280° C liegt. Die Bromzahl des Produktes liegt unter 0,01.

### Beispiel 2

870 Gew.-Teile Pentabromphenyäthylbromid werden mit 126 Gew.-Teilen einer 50%igen, wäßrigen Natriumhydroxidlösung und 2000 Gew.-Teilen Methylglykol vermischt und unter Rühren zum Sieden erhitzt, bis das Wasser aus dem Reaktionsgemisch über eine Kolonne abgetrieben ist. Nachdem das Reaktionsgemisch dabei eine Temperatur von 120° C erreicht hat, werden zweimal im Abstand von 2 Stunden jeweils 12,5 Gew.-Teile Dicumylperoxid in 130 Gew.-Teilen Methylglykol zudosiert. Anschließend wird das Reaktionsgemisch noch weitere 2 Stunden bei gleicher Temperatur gerührt. Nach dem anschließenden Abkühlen wird das entstandene Polymerisat nach der in Beispiel 1 beschriebenen Weise abgetrennt, gewaschen und getrocknet. Es werden 686 Gew.-Teile Polypentabromstyrol als farbloses Pulver erhalten. Der Erweichungspunkt dieses Produktes auf der Kofler-Bank liegt über 280° C, sein Bromgehalt beträgt 78% und seine Bromzahl liegt unter 0,01.

### Beispiel 3

290 Gew.-Teile Pentabromphenyläthylbromid werden mit 32 Gew.-Teilen Natriumcarbonat und 650 Gew.-Teilen Methylglykol vermischt und unter Rühren zum Sieden erhitzt. Nach 3 Stunden wird eine Lösung von 5 Gew.-Teilen Azo-bis-(isobutyronitril) in 105 Gew.-Teilen Methylglykol im Laufe von 3 Stunden kontinuierlich zudosiert. Während dieser Reaktionszeit fällt das Polymerisat als farbloses feinteiliges Produkt aus. Nach einer weiteren Stunde wird das Gemisch auf Raumtemperatur abgekühlt und filtriert. Das Polymerisat wird danach mit 50 Gew.-Teilen Methylglykol gewaschen und anschließend mit einem Gemisch von 480 Gew.-Teilen Methanol und 120 Gew.-Teilen Wasser aufgeschlämmt und unter Rühren 1 Stunde am Rückfluß gekocht. Nach dem anschließenden Abkühlen, Abfiltrieren und Trocknen werden 230 Gew.-Teile Polypentabromstyrol erhalten, dessen Erweichungspunkt auf der Kofler-Bank über 280° C liegt. Der Bromgehalt beträgt 78,6%, die Bromzahl liegt unter 0,01.

### Beispiel 4 (Verwendung)

Eine Mischung aus 77 Gew.-Teilen ABS-Kunststoff mit einer Vicat-Erweichungstemperatur von 99° C/5 Kp. Belastung, 17 Gew.-Teilen Polypentabromstyrol, 5 Gew.-Teilen Antimontrioxid und 1 Gew.-Teil Rußbatch werden zu einem Walzenfell verarbeitet und daraus 3,2 mm starke Platten für die Brandtests nach der Vorschrift UL 94 der Underwriter's Laboratories, USA, und 2,0 mm starke Platten für den Ausschitztest bei einer Temperatur von 80° C in Luft geschnitten. Die 3,2 mm starken Platten erfüllen den vorgenannten Brandtest in der Klasse VO, während die 2 mm starken Platten nach 250 Stunden Ausschwitztest keinen Belag und keinen Gewichtsverlust zeigen.

Wird anstelle des Polypentabromstyrols das Pentabromstyrol in der vorstehend angegebenen Mischung eingesetzt, so zeigen die Platten im Ausschwitztest weiße Beläge und eine Ausschwitzrate von 9,4%. Die frisch gefertigten Platten erfüllen die Bedingungen der Klasse VO des vorerwähnten Brandtests.

## Beispiel 5 (Verwendung)

Eine Mischung von 86 Gew.-Teilen Polyester-Kunststoff (Polybutylenterephthalat), 10 Gew.-Teilen Polypentabromstyrol und 4 Gew.-Teilen Antimontrioxid werden auf der Spritzgußmaschine zu 1,6 mm starken Teststäben verarbeitet. Diese Teststäbe erfüllen nach dem Brandtest UL 94 die Klasse VO. Von der obengenannten Mischung werden für den Ausschwitztest 2 mm starke Platten hergestellt. Diese Platten zeigen nach 108 Stunden Lagerung bei 140° C keinen Belag.

## Beispiel 6 (Verwendung)

Eine Mischung von 81,5 Gew.-Teilen Polybutadien-modifiziertem Polystyrol (hochschlagzähes Polystyrol, HIPS), 14 Gew.-Teilen Polypentabromstyrol und 4,5 Gew.-Teilen Antimontrioxid werden, wie in Beispiel 5 beschrieben, zu 1,6 mm starken Teststäben und 2 mm starken Platten verarbeitet. Die Teststäbe erfüllen nach dem Brandtest der Vorschrift UL 94 die Klasse VO. Die Platten zeigen nach 250 Stunden Lagerung bei 80° C keinen Belag und keinen Gewichtsverlust.

Die erwähnten Brandtests nach der Vorschrift UL 94 der Underwriter's Laboratories, USA, werden folgendermaßen durchgeführt:

Eine Probe von 127 mm Länge und 12,7 mm Breite wird so in eine Haltevorrichtung eingespannt, daß die Längsachse der Probe senkrecht verläuft und ihre Vorderkante sich 9,5 mm über dem Brennerrohr eines Bunsenbrenners befindet. Der Brenner wird abseits der Probe entzündet, die nichtleuchtende Flamme auf eine Höhe von 19 mm eingestellt und dann der Brenner unter die Mitte der Probenunterkante gestellt. Nach 10 Sekunden wird der Brenner entfernt und Nachbrenndauer und Nachglimmdauer der Probe gemessen.

Nach vollständigem Erlöschen wird die Probe ein zweites Mal 10 Sekunden beflammt und die zweite Nachbrenn- und Nachglimmdauer bestimmt.

Danach wird die Probe in folgende Klassen eingestuft:

VO = keine Nachbrenndauer von zusammen mehr als 10 Sek. keine Nachglimmdauer über 30 Sek. nach der 2. Beflammung kein Abtropfen, das untergelegte Watte entzündet

V1 = keine Nachbrenndauer von zusammen mehr als 50 Sek. keine Nachglimmdauer über 60 Sek. nach der 2. Beflammung kein Abtropfen, das untergelegte Watte entzündet

V2 = keine Nachbrenndauer von zusammen mehr als 50 Sek. keine Nachglimmdauer über 60 Sek. nach der 2. Beflammung Probe darf brennend abtropfen und untergelegte Watte entzünden.

## Patentansprüche

1. Verfahren zur Herstellung von Polypentabromstyrol aus bromiertem Styrol in Gegenwart eines Lösungsmittels und eines Polymerisationskatalysators, dadurch gekennzeichnet, daß als Lösungsmittel ein Alkohol mit einem Siedepunkt von über 100° C eingesetzt und die Polymerisation bei einer Temperatur von 100 bis 150° C durchgeführt wird.

2. Verfahren nach Anspruch 1, dadurch gekennzeichnet, daß Pentabromphenyläthylbromid mit Alkali, vorzugsweise Natriumhydroxid bzw. Natriumcarbonat, in einem Alkohol mit einem Siedepunkt von über 100° C zum Sieden erhitzt wird bis das entstandene Wasser aus dem Reaktionsgemisch entfernt ist, worauf in das auf einer Temperatur von etwa 120° C gehaltene Gemisch ein in dem gleichen Alkohol gelöster Polymerisationskatalysator im Laufe von 2 Stunden zugemischt wird.

3. Verwendung des nach Anspruch 1 oder 2 hergestellten Polypentabromstyrol als Brandschutzmittel für thermoplastische Kunststoffe.

## Claims

1. Process for the preparation of pentabromostyrene polymers from brominated styrene in the presence of a solvent and a polymerization catalyst, characterized in that an alcohol with a boiling point in excess of 100° C is used as the solvent and the polymerization is carried out at a temperature of 100 to 150° C.

2. Process according to claim 1, characterized in that pentabromophenylethyl bromide is heated to boiling with an alkali, preferably sodium hydroxide or sodium carbonate, in an alcohol with a boiling point in excess of 100° C until the resulting water is removed from the reaction mixture, whereupon in the course of 2 hours a polymerization catalyst dissolved in the same alcohol is added to the mixture maintained at a temperature of 120° C.

3. Use of the pentabromostyrene polymers prepared in accordance with claim 1 or 2 as a fireproofing agent for thermoplastics.

## Revendications

1. Procédé pour la préparation de polymères de pentabromostyrène à partir de styrène bromé en présence d'un solvant et d'un catalyseur de polymérisation, caractérisé en ce que le solvant utilisé est un alcool à point d'ébullition supérieur à 100°C et que la polymérisation s'effectue à une température de 100 à 150°C.

2. Procédé suivant la revendication 1, caractérisé en ce que du bromure de pentabromophényléthyle est porté à ébullition avec un alcali, de préférence de l'hydroxyde de sodium ou du carbonate de sodium, dans un alcool à point d'ébullition supérieur à 100°C jusqu'à ce que l'eau formée soit éliminée du mélange réactionnel, un catalyseur de polymérisation dissous dans le même alcool étant ensuite ajouté pendant 2 heures au mélange maintenu à une température d'environ 120°C.

3. Utilisation des polymères de pentabromostyrène préparés suivant la revendication 1 ou 2 comme ignifugeants pour matières thermoplastiques.